# EUROPÄISCHE PATENTANMELDUNG

(11) **EP 3 804 914 A1**
(43) Veröffentlichungstag der Anmeldung: **14.04.2021**
(21) Anmeldenummer: 20200858.7
(22) Anmeldetag: 08.10.2020
(51) Int. Cl.: B25H 3/00, B25H 1/16, B44D 3/14, B62B 3/10, B62B 3/02, B62B 5/00

(54) **FAHRBARER MALER-UTENSILIENTRÄGER**

(30) Priorität: 09.10.2019 DE 202019105556 U; 09.04.2020 DE 202020101978 U
(71) Anmelder: Reismann, Daniel, 48268 Greven (DE); Witzke, Manfred, 48159 Münster (DE)
(72) Erfinder: Reismann, Daniel, 48268 Greven (DE); Witzke, Manfred, 48159 Münster (DE)
(74) Vertreter: Habbel, Ludwig

(57) **Zusammenfassung**

Die Erfindung schlägt einen Utensilienträger (1) für Maler-Utensilien vor mit einem wenigstens drei Laufräder (3) aufweisenden Fahrgestell (2), und mit einer zur Aufnahme eines Farbeimers (11) ausgelegten Halterung (8), wobei die Halterung (8) eine Reling (7) aufweist, die dazu ausgelegt ist, den Farbeimer (11) seitlich zu führen und einen zur Aufnahme des Farbeimers (11) ausgelegten Freiraum umgibt, wobei die Halterung (8) relativ zum Fahrgestell (2) höhenverstellbar ist.

## Beschreibung

Die Erfindung betrifft einen fahrbaren Utensilienträger für Maler-Utensilien.

Bei Malerarbeiten werden sehr häufig Farbeimer mit Wandfarbe verwendet, welche ein Fassungsvermögen von 10 l bis 20 l aufweisen und dementsprechend schwer sind. Beispielsweise kann ein 12,5 l-Farbeimer im vollen Zustand ein Gewicht von etwa 18 kg aufweisen. Typisch sind die in der Praxis weit verbreiteten Farbeimer mit einem ovalen Querschnitt. Die Farbeimer werden geöffnet und auf dem Boden abgestellt. Anschließend wird ein Farbträger wie z. B. eine Farbrolle oder ein Pinsel in die Farbe eingetaucht. Mittels des Farbträgers wird die Wandfarbe auf eine Innen- oder Außenwand eines Gebäudes aufgetragen, wobei nachfolgend stets eine Farbrolle erwähnt wird, die als Beispiel für auch andere verwendbare Farbträger steht. Die Farbrolle muss regelmäßig erneut mit Wandfarbe benetzt werden. Insbesondere wenn die Farbrolle nicht mit einem Verlängerungsstiel ausgestattet ist, muss sich der Maler jedes Mal bücken, um die Farbrolle in die Wandfarbe einzutauchen.

Ebenfalls häufig wiederkehrende Malerarbeiten stellen Spachtelarbeiten dar. Dabei werden beispielsweise Unebenheiten in einer Wandfläche durch ein Verfüllen mit einer beispielsweise pastösen Masse und einem anschließenden Abschleifen ausgebessert. Die Spachtelmasse wird in der Praxis mit unterschiedlichen Werkzeugen aufgetragen und wird im Allgemeinen beispielsweise in Eimern bereitgestellt, sodass sich für einen Maler dieselben Herausforderungen stellen, wie in Verbindung mit dem eingangs beschriebenen Farbauftrag. Auch wenn nachfolgend stehts auf einen Farbeimer Bezug genommen wird, sind vorliegend zusätzlich Spachteleimer berücksichtigt.
Entsprechend dem Arbeitsfortschritt entlang der Wand versetzt der Maler den Farbeimer regelmäßig um einige Dezimeter, um auf diese Weise lange Laufwege zu vermeiden, die ansonsten zum Benetzen der Farbrolle erforderlich wären, wenn der Farbeimer ortsfest stehen bleiben würde. Bei glattem Untergrund kann der Farbeimer einfach per Fuß verschoben werden. Wenn jedoch der Untergrund durch ein Malervlies abgedeckt ist, muss der Farbeimer jedes Mal erfasst, angehoben und an der neuen Stelle abgesetzt werden. Auch hierzu muss der Maler sich regelmäßig bücken und zudem das Gewicht des Farbeimers entsprechend dessen jeweiligem Füllstand anheben.

Aufgrund der vorgeschriebenen Arbeitsweise gehören Rückenschäden zu einem bei Malern verbreiteten Krankheitsbild. Zudem besteht die Gefahr, dass beim Verschieben des Farbeimers sichtbare Streifen, ggf. Kratzer, in der Bodenoberfläche und dementsprechende Schäden in dem jeweiligen Arbeitsraum erzeugt werden.

Dennoch lassen sich längere Laufwege in der Praxis häufig nicht vermeiden. Dies betrifft beispielsweise Gegenstände wie Mobiltelefone, Schlüssel, Pinsel, Abdeck-Klebeband oder dergleichen, die zum Schutz vor Verschmutzungen oder weil sie so unhandlich sind, dass sie während der Arbeit hinderlich sind, nicht in der Arbeitskleidung mitgeführt werden, sondern vielmehr ortsfest abgelegt werden.

Der Erfindung liegt die Aufgabe zugrunde, einen Utensilienträger für Malerarbeiten anzugeben, der einen raschen Arbeitsfortschritt ermöglicht und eine gesundheitliche Belastung während der Malerarbeit sowie Schäden an dem jeweiligen Arbeitsraum zu verringern oder gar zu vermeiden hilft.

Diese Erfindung wird durch einen Utensilienträger mit den Merkmalen des Anspruchs 1 gelöst. Vorteilhafte Ausgestaltungen sind in den Unteransprüchen beschrieben.

Die Erfindung schlägt mit anderen Worten vor, einen fahrbaren Utensilienträger für Maler-Utensilien zu schaffen. Dieser ermöglicht erstens, die verschiedenen von einem Maler benötigten Utensilien auf dem Utensilienträger zusammenzuhalten, so dass sie entsprechend dem Arbeitsfortschritt mitgeführt werden können und dementsprechend stets zur Hand sind. Insbesondere vorteilhaft ist dabei der gesundheitliche Aspekt, dass nämlich auch der Farbeimer auf dem Utensilienträger mitgeführt wird. Der Farbeimer stellt nämlich nicht nur typischerweise ein vergleichsweise schweres, sondern insbesondere das Utensil dar, auf welches der Maler am häufigsten zugreifen muss. Daher ist der Utensilienträger auf einen bestimmten Typ von Farbeimer abgestimmt, beispielsweise auf einen bestimmten Durchmesser eines kreisrunden Farbeimers oder insbesondere auf die Abmessungen der erwähnten ovalen Farbeimer, die in der Praxis weit verbreitet sind, so dass dementsprechend die Reling in einer als vorteilhaft angesehenen Ausgestaltung einen ovalen Freiraum zur Aufnahme eines solchen ovalen Farbeimers umgeben kann.

Da der Utensilienträger fahrbar ist, kann er einfach per Fuß verschoben bzw. verfahren werden, so dass die den Rücken belastende Tätigkeit, den Farbeimer stets anheben und versetzen zu müssen, vollständig entfallen kann. Hinzu kommt, dass der Farbeimer auf dem Utensilienträger im Abstand oberhalb von dem Boden angeordnet ist, über welchen der Utensilienträger fährt, so dass beim regelmäßigen Eintauchen eines Farbträgers in den Farbeimer der Utensilienträger einen weiteren rückenschonenden Vorteil bietet, da die Bück-Bewegung entweder vollständig entfallen kann oder jedenfalls nicht so tief hinunter erfolgen muss wie bislang üblich.

Im Ergebnis kann mittels des Utensilienträgers zusätzlich zu den gesundheitlichen Vorteilen für den Maler auch der Arbeitsfortschritt verbessert werden: lange Laufwege können zuverlässig vermieden werden, und aufgrund der geringeren körperlichen Belastung können die Arbeiten dementsprechend ermüdungsärmer durchgeführt werden.

Der vorschlagsgemäße Utensilienträger weist ein Fahrgestell mit wenigstens drei Rädern auf, so dass der Utensilienträger frei im Raum stehen kann. Der Utensilienträger dient dazu, den Farbeimer zu halten. Mittels des Fahrgestells kann der Farbeimer problemlos auch über Untergründe bewegt werden, die ein Verschieben bzw. Gleiten des Farbeimers auf dem Boden nicht ermöglichen. Insbesondere muss der Farbeimer nicht angehoben werden, um ihn auf dem Untergrund ein Stück weiter zu bewegen. Zudem ist der Farbeimer mittels des Fahrgestells oberhalb vom Boden angeordnet, kommt dem Benutzer also hinsichtlich der Erreichbarkeit des Farbeimers im wahrsten Wortsinne entgegen.

Vorschlagsgemäß ist schließlich auch vorgesehen, dass die Halterung in Bezug auf das Fahrgestell höhenverstellbar ist. Auf diese Weise kann der Eimer wahlweise weit unten im Utensilienträger gehalten werden, z.B. möglichst bodennah auf dem Fahrgestell angeordnet werden. Dies ist beispielsweise vorteilhaft, wenn mit einer größeren Farbrolle am langen Stiel gearbeitet und eine Wand "gerollt" werden soll, so dass dieses Werkzeug nicht umständlich gehandhabt zu werden braucht, um die Farbrolle in einen vergleichsweise hoch angeordneten Farbeimer tauchen zu können. Andererseits kann die Halterung höher angeordnet werden, wenn mit einer kleineren Rolle oder einem Pinsel gearbeitet und eine Wand "beschnitten" werden soll, so dass sich der Maler aufgrund der höheren Anordnung des Farbeimers nicht tief bücken muss, um das Malerwerkzeug in den Farbeimer eintauchen zu können. Für die beiden unterschiedlichen Arbeitsweisen wird mittels der höhenverstellbaren Halterung daher stets eine optimal ergonomische Handhabung des jeweiligen Malerwerkzeugs ermöglicht.

Die Höhenverstellung der Halterung kann beispielsweise mittels gelenkiger Elemente wie z.B. einer Scherenmechanik erfolgen, oder mittels teleskopierbarer Elemente. Eine besonders robuste und gegen Verschmutzungen unempfindliche Möglichkeit zur Höhenverstellung der Halterung kann darin bestehen, Distanzelemente zwischen dem Fahrgestell und der Halterung zu montieren, dass die Höhenverstellung ohne bewegliche Elemente, sondern lediglich durch das Auswechseln der Distanzelemente ermöglicht wird. Die Distanzelemente können als einzelne Distanzstreben ausgestaltet sein, beispielsweise um einzelne aufrecht verlaufende Streben eines rahmenartigen Gestells des Utensilienträgers zu verlängern, oder die Distanzelemente können zu einem kompletten Zwischenmodul zusammengefasst sein, welches wahlweise zwischen der Halterung und dem Fahrgestell angeordnet wird.

Vorteilhaft kann die Reling als ein liegend verlaufender Ring ausgestaltet sein und in Anpassung an den jeweils vorgesehenen Eimer-Typ einen kreisrunden oder ovalen Querschnitt aufweisen. Im Vergleich dazu, den Eimer lediglich bereichsweise, ggf. sogar lediglich nur punktuell entlang seines Umfangs zu führen, bietet die als Ring ausgestaltete Reling einen sicheren Halt auch für kleinere Eimer, an welche die Reling nicht optimal angepasst ist.

Vorzugsweise weist das Fahrgestell zugunsten einer möglichst großen Standsicherheit vier oder mehr Räder auf.

Die Räder des Fahrgestells können sämtlich lenkbar ausgestaltet sein, beispielsweise als handelsübliche so genannte Lenkrollen, die um eine aufrechte Achse lenkbar sind. Es kann jedoch auch vorgesehen sein, starre und lenkbare Räder zu verwenden, bei einem Fahrgestell mit vier Rädern beispielsweise zwei starre so genannte Bockrollen und zwei Lenkrollen.

Da in der Praxis überwiegend auf ebenem Untergrund gearbeitet wird, beispielsweise in Innenräumen, können die Räder des Fahrgestells frei drehbar sein. Es kann jedoch auch vorgesehen sein, eines oder mehrere der Räder gebremst auszugestalten, so dass der Utensilienträger bei gelöster Bremse problemlos verschoben werden kann, bei aktivierter Bremse jedoch ortsfest steht und gegen Wegrollen gesichert ist. Grundsätzlich reicht ein bremsbares Laufrad aus. Vorteilhaft können jedoch wenigstens zwei bremsbare Laufräder vorgesehen sein, um zu verhindern, dass der Utensilienträger um ein einziges Laufrad, dessen Bremse betätigt wurde, wie um eine Schwenkachse schwenkt. Insbesondere kann vorteilhaft vorgesehen sein, dass sämtliche Laufräder des Utensilienträgers bremsbar ausgestaltet sind. Unabhängig davon, wie der Utensilienträger relativ zum Benutzer ausgerichtet ist, kann in jedem Fall das dem Benutzer nächste Laufrad bzw. dessen Bremse betätigt werden, um den Utensilienträger gegen Wegrollen zu sichern, so dass eine möglichst einfache Handhabung des Utensilienträgers unterstützt wird.

Der Utensilienträger kann als Rahmenkonstruktion ausgestaltet sein, die eine Mehrzahl von Streben aufweist, beispielsweise in Form von Profilstreben oder Rohren. Auf diese Weise können ein geringes Gewicht und zugleich eine hohe mechanische Stabilität erreicht werden. Die Streben können vorzugsweise aus Metall bestehen. Zugunsten einer hohen mechanischen Stabilität können die Streben fest miteinander verbunden, z.B. verschweißt sein. Die Rahmenkonstruktion ermöglicht zudem einen problemlosen Zugriff aus unterschiedlichen Richtungen auf Gegenstände, die innerhalb des Rahmens angeordnet sind.

Um den Utensilienträger beim Verkauf platzsparend versenden zu können oder ihn später im Handwerkerfahrzeug platzsparend transportieren zu können, können die Streben jedoch auch gelenkig miteinander verbunden oder voneinander lösbar sein, beispielsweise in an sich bekannter Weise als Steck- oder Schraubkonstruktion.

Weiterhin weist der Utensilienträger eine Halterung für den Farbeimer auf. Die Halterung ist oberhalb des Fahrgestells angeordnet, so dass sich der Benutzer weniger tief als bislang bücken muss, um die Farbrolle in den Farbeimer eintauchen zu können. Vorteilhaft ist die Halterung sogar so hoch angeordnet, dass ein Zugriff auf den Farbeimer möglich ist, ohne dass sich der Benutzer bücken muss. Beispielsweise kann der Farbeimer so hoch angeordnet sein, dass sich sein Boden in einer Höhe von etwa 60 bis 120 cm befindet.

Die Halterung weist eine Reling auf, die der Wand des Farbeimers anliegt oder in einem geringen Abstand zu dieser Wand angeordnet ist, so dass der Farbeimer mittels der Reling ringsum gegen seitliches Verrutschen gesichert ist, ggf. mit Spiel, und insbesondere dagegen gesichert ist, von dem Utensilienträger herabzurutschen. Auch beim Befahren unebener Böden, z. B. profilierter Fliesen, Waschbetonplatten oder dergleichen, ist der Farbeimer somit gegen vibrationsbedingtes "Wandern" gesichert. Als seitliches Verrutschen werden im Rahmen des vorliegenden Vorschlags nicht etwa Rutschbewegungen bezeichnet, die von einer bestimmten Fahrtrichtung des Utensilienträgers aus zur Seite gerichtet sind, sondern sämtliche Bewegungen in horizontalen Richtungen, im Unterschied zu einer nach oben oder nach unten gerichteten Bewegung, wie sie beispielsweise vorgesehen sind, wenn ein Farbeimer in die Halterung eingestellt oder aus der Halterung entnommen wird.

Der Begriff der Reling legt eine Ausgestaltung als Geländer, Bügel, Leiste oder dergleichen nahe, ist im Rahmen des vorliegenden Vorschlags jedoch sinnbildlich gebraucht, so dass beispielsweise auch geschlossene umlaufende Wände, einzelne Haltestifte oder dergleichen als Reling im Sinne des vorliegenden Vorschlags gelten, sofern sie an die Formgebung des Farbeimers in der Art angepasst sind, dass sie die gewünschte Führung des Farbeimers gewährleisten. Zu große Toleranzen würden ermöglichen, dass der Farbeimer über eine unerwünscht große Wegstrecke ins Rutschen gerät und die Reling dann als Anschlag wirkt, die den Farbeimer dann schlagartig abbremst. Die im Farbeimer enthaltene flüssige Farbe könnte in einem solchen Fall aus dem Farbeimer heraus schwappen, was über den wirtschaftlichen Verlust hinaus zu Verschmutzungen und einer notwendigen, aufwändigen Reinigung der verschmutzten Gegenstände führen könnte oder zu deren Unbrauchbarkeit.

Dementsprechend bedeutet, wenn die Reling dem Farbeimer "anliegen" soll, im Rahmen des vorliegenden Vorschlags nicht notwendigerweise, dass die Reling in direktem Kontakt mit dem Farbeimer stehen muss, sondern dass sie den Farbeimer mit einer ausreichend geringen Toleranz führt. Rein beispielhaft kann vorgesehen sein, dass der Farbeimer in allen horizontalen Richtungen ein Spiel von höchstens 1 cm bis zur Reling aufweist. Vorteilhaft ist das Spiel enger toleriert, z. B. 2-3 mm umlaufend um den Farbeimer. Dies gewährleistet einerseits eine sichere seitliche Führung und andererseits eine problemlose Handhabung, wenn der Farbeimer von oben in den Freiraum der Halterung eingeführt wird, insbesondere da sich die ovalen Farbeimer nach unten auch noch geringfügig verjüngen.

Es kann vorgesehen sein, den Farbeimer auch gegen abhebende Kräfte zu sichern. Dies kann beispielsweise vorteilhaft sein, um bei geringem Füllstand und dementsprechend geringem Eigengewicht und insbesondere bei Außenarbeiten den Farbeimer gegen die Einwirkung von Wind zu sichern. Für derartige Fälle kann vorteilhaft vorgesehen sein, die Reling mit einem oder mehreren zusätzlichen Sicherungselementen zu versehen, welche beispielsweise den oberen Rand des Farbeimers übergreifen und den Farbeimer auf diese Weise gegen abhebende Kräfte sichern.

In ersten praktischen Versuchen hat sich jedoch herausgestellt, dass die Reling darauf beschränkt sein kann, den Farbeimer gegen horizontales Verrutschen zu sichern. Aufgrund seines Eigengewichts und der Lage seines Schwerpunkts - der mit sinkendem Füllstand zudem während der Arbeit absinkt - ist der Farbeimer üblicherweise ausreichend standsicher. Wenn darauf verzichtet wird, den Farbeimer gegen abhebende Kräfte zu sichern, kann einerseits eine problemlose Handhabung des Farbeimers unterstützt werden, indem dieser von oben in die Reling eingesetzt oder aus dieser entnommen werden kann, oder indem problemlos ein Deckel auf den Farbeimer aufgesetzt oder vom Farbeimer abgenommen werden kann, während der Farbeimer innerhalb der Reling angeordnet ist, da keine den Farbeimer übergreifenden Sicherungselemente eine solche Handhabung behindern.

In einer Ausgestaltung kann die Halterung eine Abstellfläche aufweisen, auf welcher der Farbeimer aufsteht und die tiefer angeordnet ist als die Reling. Auf diese Weise ist es nicht erforderlich, dass die Reling einen oberen, umlaufenden Kragen des Farbeimers präzise unterfasst, der Farbeimer also von oben in die Reling eingehängt werden kann. Dementsprechend können Abmessungstoleranzen der Farbeimer, z.B. fertigungsbedingt oder aufgrund unterschiedlicher Hersteller, problemlos ausgeglichen werden. Getragen wird der Farbeimer durch die Abstellfläche des Utensilienträgers, und die Reling dient lediglich dazu, den Farbeimer gegen horizontales Verrutschen zu sichern. Hierzu kann die Reling dem Farbeimer entweder passgenau anliegen, oder sie kann ihn mit gewissen Toleranzen führen.

Die Reling kann dem Farbeimer in dessen unteren Bereich anliegen. Auf diese Weise sind beispielsweise Beschriftungen des Farbeimers möglichst vollständig lesbar.

Die Reling kann beispielsweise durch drei oder mehr aufrecht stehende oder auch liegend ausgerichtete Zapfen, oder durch eine umlaufende Kante oder Rippe gebildet werden, die von der Abstellfläche aus nach oben ragen oder im Abstand oberhalb der Abstellfläche angeordnet sind, und die jeweils einen Freiraum umgeben, in den der Farbeimer gestellt werden kann.

Vorteilhaft kann die Reling dem Farbeimer in dessen oberen Bereich anliegen, denn so ist der Farbeimer nicht nur gegen Verrutschen, sondern auch gegen Umkippen gesichert. Hierzu kann entweder vorgesehen sein, dass die Reling von der Abstellfläche aus entsprechend weit nach oben ragt, es kann jedoch auch die Reling im Abstand oberhalb von der Abstellfläche angeordnet sein, um den Farbeimer in dessen oberem Bereich zu sichern.

In einer Ausgestaltung kann die Halterung für den Farbeimer ohne eine Abstellfläche ausgestaltet sein und beispielsweise einen Ring aufweisen, der die Reling bildet und in den der Farbeimer von oben eingehängt werden kann. An Stelle eines umlaufenden, geschlossenen Rings können auch mehrere breitere Zungen bzw. schmalere Finger vorgesehen sein, die ringförmig angeordnet sind und einen Freiraum umgeben, in welchen der Farbeimer eingehängt werden kann. Die Zungen bzw. Finger können stehend oder liegend ausgerichtet sein.

In einer Ausgestaltung kann die Halterung für den Farbeimer zwar ohne eine geschlossene Abstellfläche ausgestaltet sein, aber dennoch bereichsweise den Boden des Farbeimers untergreifen. So kann beispielsweise eine Reling vorgesehen sein, die den Farbeimer in seinem oberen Bereich umgibt, und von der Reling erstrecken sich L-förmige Halter nach unten, wobei die unteren, liegenden Schenkel der L-förmigen Halter eine Art Tiefenanschlag für den Farbeimer und punktuelle Abstellflächen bilden, auf denen der Farbeimer mit seinem Boden steht.

Um zu vermeiden, dass die erwähnten L-förmigen Halter nach außen gespreizt werden und der Farbeimer anschließend nach unten durchrutschen kann, können zwei gegenüberliegende L-förmige Halter miteinander verbunden sein zu einem insgesamt U-förmigen Halter.

Vorteilhaft kann entweder die gesamte Halterung auswechselbar am Utensilienträger montiert sein, oder zumindest die Reling. Nachfolgend wird dieser Gedanke am Beispiel einer auswechselbaren Reling erläutert, wobei jedoch auch die gesamte Halterung einschließlich der Reling auswechselbar sein kann.

Die Montage der Reling bzw. der gesamten Halterung kann entweder eine regelrechte Befestigung darstellen, beispielsweise in Form einer Verschraubung, es kann jedoch vorgesehen sein, die Reling lediglich in eine entsprechende Aufnahme des Utensilienträgers einzustecken, falls wie weiter oben erwähnt eine Sicherung gegen abhebende Kräfte nicht erforderlich ist. Da nicht auszuschließen ist, dass die Reling beim Einstellen eines Farbeimers kontaktiert und ggf. beschädigt - beispielsweise verformt - werden kann, kann die Auswechselbarkeit der Reling eine preiswerte Reparatur des Utensilienträgers ermöglichen. Je nach konstruktiver Ausgestaltung des Utensilienträgers kann zudem die Reling einen nach oben ragenden Vorsprung darstellen, so dass es für den Transport des Utensilienträgers vorteilhaft sein kann, durch Demontage der Reling erstens das erforderliche Transportvolumen des Utensilienträgers und zweitens das Beschädigungsrisiko der Reling zu verringern.

Auch um unterschiedliche Farbeimer in der Halterung sicher festlegen zu können, kann in einer Ausgestaltung vorgesehen sein, den gesamten Halter oder zumindest die Reling auswechselbar auszugestalten. Sie ist als Konturstück an einen bestimmten Typ von Farbeimer angepasst und kann gegen andere Relings ausgewechselt werden, die als dementsprechend unterschiedliche Konturstücke Freiräume aufweisen, welche an die dementsprechend unterschiedlichen anderen Farbeimer-Typen angepasst sind. Beispielsweise können oval verlaufende Relings an unterschiedliche Umfänge von ovalen Farbeimern angepasst sein, oder kreisrund verlaufende Relings können mit unterschiedlichen Durchmessern für unterschiedlich große zylindrische Farbeimer bereitgestellt werden. Zusätzlich kann vorgesehen sein, unterschiedliche Höhenabstände zur Abstellfläche zu berücksichtigen, um einerseits auch niedrige Farbeimer mittels der Reling überhaupt erfassen und führen zu können, und um andererseits auch höhere Farbeimer möglichst kippsicher jeweils in deren oberen Bereich erfassen und führen zu können.

In einer anderen Ausgestaltung kann die Halterung einschließlich der Reling an den größten zu verwendenden Farbeimer angepasst sein, beispielsweise an die eingangs erwähnten typischen ovalen Farbeimer. Zur sicheren Festlegung kleinerer Farbeimer wird nicht die gesamte Halterung oder die Reling ausgewechselt, sondern es können Reduzierstücke vorgesehen sein, die in die Halterung bzw. in die Reling eingesetzt werden können und Freiräume aufweisen, welche an die dementsprechend kleineren anderen Farbeimer angepasst sind. Auch in diesem Fall kann es aus den weiter oben genannten Gründen vorteilhaft sein, dass die Reling auswechselbar am Utensilienträger montiert ist. In diesem Fall stellt die Reling ein Grundelement dar, welches stets am Utensilienträger montiert werden kann und beispielsweise eine besonders hohe Stabilität aufweist. Die Reduzierstücke können leichter und / oder weniger stabil und dementsprechend preisgünstig ausgestaltet werden.

Unabhängig von der Halterung, die für den Farbeimer vorgesehen ist und ggf. eine Abstellfläche für den Farbeimer aufweist, kann der Utensilienträger eine oder mehrere Platten aufweisen, die einerseits den Utensilienträger stabilisieren und andererseits zur Ablage von Utensilien genutzt werden können. Da eine solche Platte auch zur Ablage von Utensilien genutzt werden kann, wird im Rahmen des vorliegenden Vorschlags ausschließlich der Begriff "Platte" verwendet, wobei es sich jedoch stets um liegend ausgerichtete Platten handelt.

Ein erster Aspekt der Stabilisierung liegt darin, dass die Platte einzelne Bauteile des Utensilienträgers, z.B. Streben einer Rahmenkonstruktion, miteinander verbindet und durch diesen Verbund die Formstabilität des Utensilienträgers verbessert wird.

Ein zweiter Aspekt der durch die Platte erreichbaren Stabilisierung, nämlich der Fahr- und Standsicherheit des Utensilienträgers, kann darin bestehen, dass der Schwerpunkt des Utensilienträgers nach unten verlagert wird, indem die Platte dementsprechend möglichst tief angeordnet ist. Die Verlagerung des Schwerpunkts nach unten wird einerseits durch das Eigengewicht der Platte selbst bewirkt und andererseits dadurch, dass auf dieser Platte vergleichsweise schwere Utensilien abgestellt werden können, beispielsweise ein zweiter, voller Farbeimer als Reserve, oder ein Radio, Getränkeflaschen oder dergleichen. Insbesondere können hier Utensilien abgestellt werden, auf die nicht häufig zugegriffen werden muss, so dass sich der Maler nicht häufig bücken muss.

Eine vergleichsweise höher angeordnete Platte kann zur griffbereiten Ablage von Utensilien genutzt werden, auf die häufiger zugegriffen werden muss, beispielsweise Abklebebänder, Pinsel oder dergleichen. Diese höhere Platte kann in einer griffgünstigen Höhe von beispielsweise 60 bis 120 cm über dem Boden angeordnet sein, auf welchem der Utensilienträger steht. Besonders vorteilhaft kann diese höhere Platte als zweite Platte zusätzlich zu einer tieferen Platte vorgesehen sein, was nicht nur die mechanische Stabilisierung des Utensilienträgers positiv beeinflusst, sondern auch besonders viele Ablagemöglichkeiten bietet. Die höhere Platte kann zudem als Abstellfläche dienen, auf welcher der Farbeimer angeordnet wird, und die dementsprechend einen Teil der Halterung bildet und tiefer angeordnet ist als die Reling.

Weiterhin können Halteelemente vorgesehen sein, die zur Aufnahme weiterer Maler-Utensilien dienen. Diese Halteelemente schaffen Ordnung und stellen sicher, dass bestimmte Utensilien stets an einer bestimmten Stelle aufzufinden sind. Beispielsweise kann ein Halteelement als zapfenartiger Vorsprung ausgestaltet sein und dazu dienen, eine Rolle mit Abklebeband auf diesen Vorsprung zu hängen. Oder eine horizontale Leiste oder Platte kann als Halteelement dienen und eine Ausnehmung aufweisen, die als Einstecköffnung ausgestaltet ist, zum Beispiel in Form einer vertikalen Bohrung oder seitlich offen mündend, Omegaförmig verlaufend, wobei die Einstecköffnung zur Aufnahme eines Pinsels oder eines anderen stabförmigen Werkzeugs dienen kann. Eine Klemme kann zur Halterung von Papier dienen, um Notizen, Grundrisse oder dergleichen lesbar zu präsentieren. Oder ein Halteelement kann als separate Schale ausgestaltet sein bzw. als Mulde in einer Platte, um Kleinteile wie Schlüssel oder dergl. aufzunehmen. Andere als diese rein beispielhaft genannten Ausgestaltungen der Halteelemente können vorgesehen sein, um universal nutzbare oder an einen speziellen Einsatzzweck spezifisch angepasste Halteelemente zu schaffen.

Der Utensilienträger kann gelenkig miteinander verbundene und / oder voneinander lösbare Bauteile bzw. Baugruppen aufweisen, so dass er aus seiner Gebrauchsstellung in eine platzsparende Transportstellung gebracht werden kann. Insbesondere wenn der Utensilienträger dabei nicht zerlegt wird, sondern lediglich gefaltet bzw. geklappt wird, kann sichergestellt werden, dass keine losen Teile wie z.B. steckbare oder schraubbare Verbindungselemente erforderlich sind, die ggf. verloren gehen könnten. Beispielsweise kann vorgesehen sein, den Utensilienträger in eine flache Transportstellung zu falten.

Vorteilhaft kann der Utensilienträger an seinem äußeren Umfang eines oder mehrere Dämpfungselemente aufweisen, die nach außen ragen und beim Kontakt mit einem Hindernis - z.B. mit einem Türrahmen, einer Wand oder dergleichen - Beschädigungen des Hindernisses zu vermeiden helfen. Ein solches Dämpfungselement kann beispielsweise als umlaufende Leiste aus einem Elastomerwerkstoff ausgestaltet sein, die dort vorgesehen ist, wo der Utensilienträger seinen größten Umfang aufweist. Es können jedoch auch mehrere Dämpfungselemente vorgesehen sein, beispielsweise an den Ecken, wenn der Utensilienträger einen mehreckigen Grundriss aufweist. Oder Dämpfungselemente können an Vorsprüngen vorgesehen sein, wie sie z.B. durch lenkbare Rollen des Fahrgestells je nach deren Lenkstellung geschaffen werden können. In diesem Fall kann ein Dämpfungselement beispielsweise als Bügel ausgestaltet sein, der den Schwenkbereich einer Lenkrolle abdeckt, oder das Dämpfungselement kann als Prallteller aus einem Elastomerwerkstoff ausgestaltet sein, der oberhalb der Lenkrolle angeordnet ist und über die Lenkrolle in ihren sämtlichen konstruktiv möglichen Lenkstellungen radial hinausragt.

Der Utensilienträger kann höhenverstellbar ausgestaltet sein, um beispielsweise in Anpassung an die Körpergröße des jeweiligen Benutzers und / oder in Anpassung an die Höhe des jeweiligen Farbeimers die Halterung auf eine solche Höhe bringen zu können, dass der jeweils verwendete Farbträger im Sinne einer möglichst einfachen Handhabung für den jeweiligen Benutzer möglichst problemlos in den Farbeimer eingetaucht werden kann. Daher kann vorteilhaft die Halterung in Bezug auf das Fahrgestell höhenverstellbar sein, so dass der Utensilienträger den Farbeimer in unterschiedlichen Höhen tragen kann.

In den vorangehenden Erläuterungen wurde stets davon ausgegangen, dass die Halterung nach oben offen ist und der Farbeimer einfach von oben in die Halterung eingestellt sowie - ggf. nach dem Lösen von Sicherungselementen - aus der Halterung entnommen werden kann. Abweichend von einer derartigen Ausgestaltung, die eine unkomplizierte Handhabung des Utensilienträgers und des Farbeimers ermöglicht, sowie eine preisgünstige Ausgestaltung des Utensilienträgers, kann der Farbeimer jedoch auch auf andere Weise in die Halterung eingebracht bzw. daraus entnommen werden: beispielsweise kann die Reling einen beweglichen Abschnitt enthalten, so dass sie regelrecht geöffnet werden kann und der Farbeimer in einer horizontalen Bewegungsrichtung in den Freiraum der Halterung und auf die Abstellfläche geschoben werden kann bzw. mit seinem Kragen in den fest stehenden oder in den geöffneten Teil der Reling eingehängt werden kann. Anschließend kann die Reling geschlossen werden. Bei dieser horizontalen Beladung der Halterung mit dem Farbeimer kann vorgesehen sein, dass der Farbeimer unter ein Sicherungselement gerät, das sich zumindest über einen Abschnitt der Oberkante des Farbeimers erstreckt, so dass der Farbeimer gegen abhebende Kräfte gesichert ist und, nachdem die Reling geschlossen worden ist, der Farbeimer gegen Bewegungen in jeglicher Richtung gesichert ist.

Ausführungsbeispiele der Erfindung werden nachfolgend anhand der rein schematischen Zeichnungen näher erläutert. Dabei zeigt
- Fig. 1: einen in drei Baugruppen zerlegten Utensilienträger,
- Fig. 2: den einsatzfertigen Utensilienträger von Fig. 1 in einer ersten Konfiguration mit tief angeordneter Halterung,
- Fig. 3: denselben Utensilienträger von Fig. 1 in einer zweiten Konfiguration mit höher angeordneter Halterung,
- Fig. 4: als Ausschnitt von einem Utensilienträger ein zweites Ausführungsbeispiel einer Halterung, und
- Fig. 5: ein drittes Ausführungsbeispiel einer Halterung als Modifikation der Halterung von Fig. 4.

In den Zeichnungen ist ein Utensilienträger 1 dargestellt. Der Utensilienträger 1 ist in mehrere Baugruppen zerlegt, wie es beispielsweise zu Transportzwecken vorteilhaft sein kann. Ein Fahrgestell 2 weist vier Laufräder 3 auf, wobei die in der Zeichnung rechts dargestellten Laufräder 3 als bremsbare Lenkrollen und die beiden anderen Laufräder 3 lediglich als Lenkrollen ausgestaltet sind. Der Utensilienträger 1 weist einen rechteckigen Grundriss auf und ist grundsätzlich als rahmenartiges Gestell ausgestaltet, mit acht liegend verlaufende Streben 4, die jeweils ein liegendes Rechteck bilden. Dabei bilden die unteren vier liegenden Streben 4 das Fahrgestell 2, welches die Laufräder 3 trägt.

Zusätzlich zu dieser Rahmenkonstruktion weist der Utensilienträger 1 in seinem unteren Bereich eine erste, vergleichsweise größere Platte 5 auf, sowie in seinem oberen Bereich eine im Vergleich dazu höher angeordnete, kleinere, zweite Platte 5. Die höhere Platte 5 bildet auch eine Abstellfläche 6, die als ein Bereich der höheren Platte 5 zusammen mit einer Reling 7 eine Halterung 8 darstellt, welche zur Aufnahme eines ovalen Farbeimers dient. Die Abstellfläche 6 ist dabei der Bereich der oberen Platte 5, der sich unterhalb der Reling 7 befindet. Bei Benutzung steht der Farbeimer auf der Abstellfläche 6 und wird durch die Reling 7 in allen seitlichen Richtungen ortsfest fixiert, mit einem geringfügigen Spiel. Die Reling 7 ist als ovaler metallischer Ring aus einem Flacheisen hergestellt und mithilfe von zwei Stützen 9 im Abstand oberhalb der Abstellfläche 6 gehalten, so dass sie den Farbeimer in dessen oberer Hälfte umgibt und kippsicher hält.

Zusätzlich zu ihrer Funktion als Teil der Halterung 8, nämlich um den Farbeimer darauf abzustellen, dient die obere Platte 5, welche die Abstellfläche 6 bildet, ebenso wie die untere Platte 5 zur Ablage von Utensilien, nämlich dort, wo sie sich seitlich über die Abstellfläche 6 hinaus erstreckt und wo sich dementsprechend der Farbeimer nicht befindet.

Dadurch, dass sich der Utensilienträger 1 von der oberen Platte 5 aus nach unten bis zu den Laufrädern 3 erweitert, weist er ein hohes Maß an Standsicherheit und Fahrsicherheit auf. Dies ermöglicht eine besonders einfache Handhabung des Utensilienträgers 1 während der praktischen Benutzung: ein kleiner Schubs per Hand oder Fuß reicht aus, um den Utensilienträger 1 ein Stück weit weiter über den Untergrund zu befördern, und die Standsicherheit bzw. Fahrsicherheit lässt den Utensilienträger 1 bei einer derartigen Handhabung nicht umkippen.

Die obere Abstellfläche 6 befindet sich bei dem dargestellten Ausführungsbeispiel in einer Höhe von 60 bis 120 cm oberhalb des Untergrundes, auf dem die Laufräder 3 stehen.

Die Halterung 8 ist an den größten in der Praxis verwendeten Farbeimer angepasst. Reduzierstücke 12 können in die Halterung 8 eingesetzt werden, beispielsweise in den ovalen Ring, der die Reling 7 bildet, eingehängt werden, um eine passgenaue Halterung 8 für einen kleineren Farbeimer zu schaffen.

Die Stützen 9 der Halterung 8 bestehen ebenfalls aus Stahl und sind mit der Reling 7 sowie mit den liegenden Streben 4 der Halterung 8 verschweißt. Im Bereich der Reling 7 wird auf diese Weise ein nach innen ragender, hinderlicher Überstand vermieden, der die Handhabung des Farbeimers erschweren könnte oder den Farbeimer beschädigen könnte. Abweichend von dem dargestellten Ausführungsbeispiel können die Stützen 9 mit der oberen Platte 5 bzw. der Abstellfläche 6 verschraubt sein.

Bei dem dargestellten Ausführungsbeispiel ist vorgesehen, dass die Halterung 8 vom Fahrgestell 2 des Utensilienträgers 1 abgenommen werden kann. Dies dient nicht nur dazu, kleinere Transportabmessungen des Utensilienträgers 1 zu ermöglichen, sondern ermöglicht es ggf. auch eine erste Halterung 8 gegen eine zweite Halterung 8 mit anderen Abmessungen auszutauschen, die an einen anderen Typ von Farbeimer angepasst ist. Abweichend von dem dargestellten Ausführungsbeispiel können eines oder mehrere Halteelemente zur ortsfesten, definierten Anordnung von Utensilien vorgesehen sein.

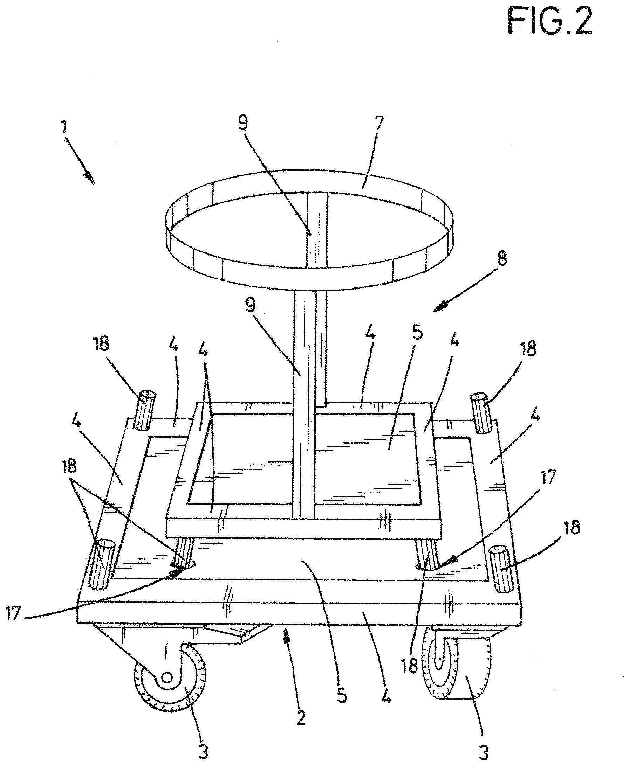

In der unteren Platte 5 des Fahrgestells 2 sind vier Einstecköffnungen 17 in Form von schräg ausgerichteten Bohrungen angeordnet. Die Halterung 8 weist vier ebenfalls schräg ausgerichtete, nach unten weisende Hülsen 18 auf. Wie aus Fig. 2 ersichtlich ist, kann die Halterung 8 in einer ersten, vergleichsweise tieferen Anordnung mit dem Fahrgestell 2 verbunden werden, indem die Hülsen 18 der Halterung 8 in die Einstecköffnungen 17 der unteren Platte 5 eingesteckt werden.

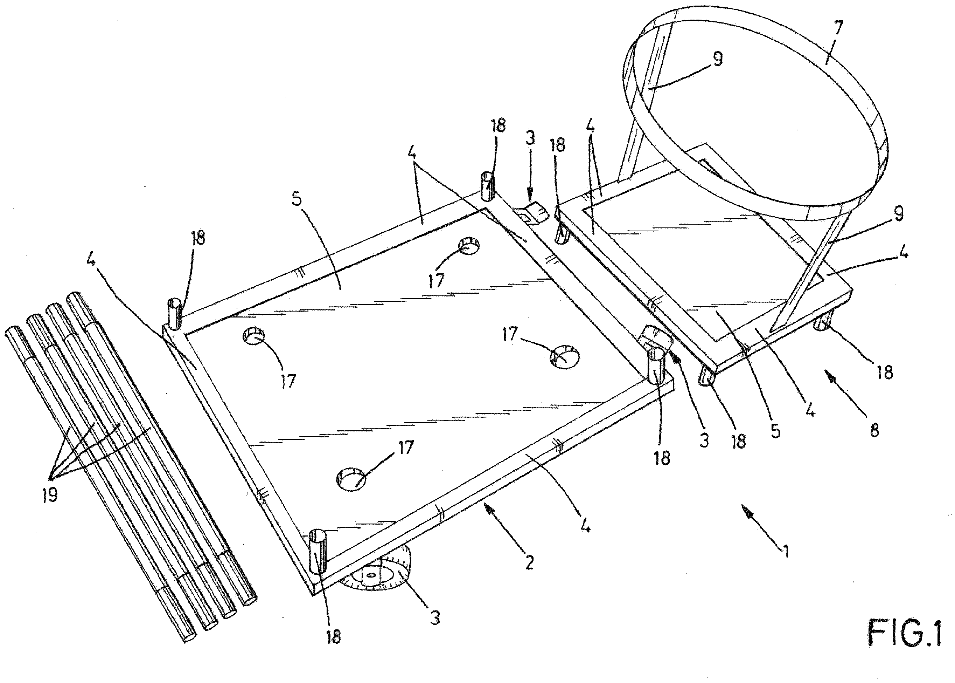

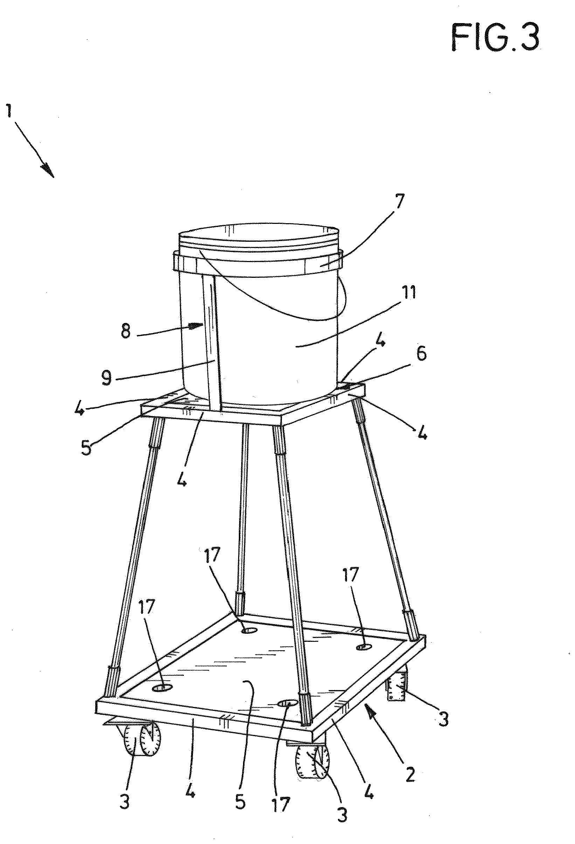

Das Fahrgestell 2 weist seinerseits ebenfalls vier schräg ausgerichtete, allerdings nach oben weisende Hülsen 18 auf. Wie aus Fig. 3 ersichtlich ist, kann die Halterung 8 in einer zweiten, vergleichsweise höheren Anordnung auf dem Fahrgestell 2 montiert werden. Hierzu dienen aufrecht verlaufende Streben verwendet, die als Distanzstreben 19 bezeichnet und in Fig. 1 links dargestellt sind. Sie weisen jeweils an ihren beiden Enden einen reduzierten Durchmesser auf, so dass sie jeweils mit ihren beiden Enden in eine Hülse 18 des Fahrgestells 2 und in eine Hülse 18 der Halterung 8 eingesteckt werden können.

In Fig. 3 ist weiterhin ein ovaler Farbeimer 11 in der Halterung 8 ersichtlich, der auf der Abstellfläche 6 aufsteht, die durch die obere Platte 5 gebildet ist, und der in seinem oberen Bereich durch die umlaufende Reling 7 geführt und gegen seitliche Verschiebekräfte gesichert wird.

Abweichend von dem dargestellten Ausführungsbeispiel kann vorgesehen sein, dass die aufrecht verlaufenden Streben nicht über ihre gesamte Länge schräg verlaufen, sondern dass vertikal verlaufende Streben bzw. Strebenabschnitte vorgesehen sind. In diesen ist die Möglichkeit einer Höhenverstellung gegeben, so dass die Höhe der Halterung 8 einstellbar ist und an die Wünsche des jeweiligen Benutzers angepasst werden kann. Die vertikal verlaufenden Streben bzw. Strebenabschnitte können insbesondere unmittelbar oberhalb von der unteren Platte 5 vorgesehen sein. Auf diese Weise wird auf der Platte 5 auch in deren Ecken ein möglichst großer Raum für die Anordnung von Utensilien geschaffen, der nicht durch schräg verlaufende Streben 4 eingeschränkt ist.

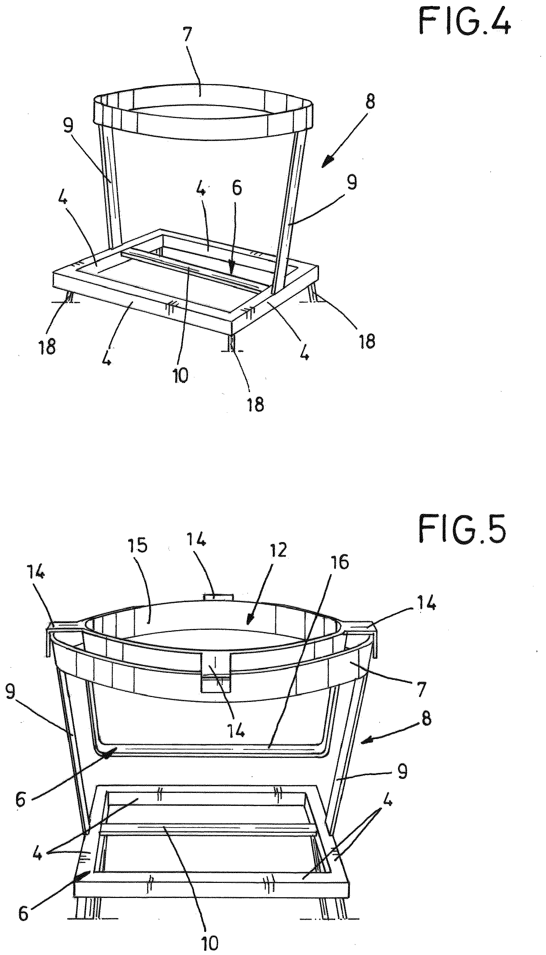

In Fig. 4 ist ein Ausführungsbeispiel mit einer Halterung 8 dargestellt, deren grundsätzliche Konstruktion mit dem Ausführungsbeispiel der Fig. 1 übereinstimmt, so dass auf die Gemeinsamkeiten nachfolgend nicht näher eingegangen wird. Ein Unterschied zum ersten Ausführungsbeispiel liegt darin, dass die Abstellfläche 6 nicht plattenförmig ausgestaltet ist. Vielmehr wird die Abstellfläche 6 durch schmale Leisten gebildet, wobei ein Mittelsteg 10 in Form eines Flacheisens ausgestaltet ist.

Der Mittelsteg 10 ist mit seinen beiden Enden an die beiden kürzeren Streben 4 der vier oberen, liegenden Streben 4 angeschweißt, so dass nicht nur der Mittelsteg 10, sondern auch die vier liegenden, oberen Streben 4 gemeinsam die Abstellfläche 6 bilden. Dadurch, dass die Stützen 9 jeweils außen auf die Streben 4 treffen, können nicht nur die längeren Streben 4 jeweils einen Anteil der Abstellfläche 6 ausmachen, sondern auch die kürzeren Streben 4.

Bei dem Ausführungsbeispiel der Fig. 1 bis 3 ist die Höhe, in welcher die Reling 7 über der Abstellfläche 6 verläuft, sowie der Umfang der Reling 7 an einen ovalen Farbeimer 11 angepasst, um den Farbeimer 11 in dessen oberem Bereich spielarm zu führen.

Fig. 5 zeigt eine Halterung 8, die entsprechend dem Ausführungsbeispiel von Fig. 4 ausgestaltet ist. Allerdings ist in die Reling 7 ein Reduzierstück 12 eingehängt, um die Halterung 8 an einen ebenfalls ovalen Farbeimer, jedoch mit einem geringeren Fassungsvermögen, anzupassen. Das Reduzierstück 12 weist Haltearme 14 auf, welche die Reling 7 übergreifen, sowie eine Innenreling 15, die ebenfalls oval verläuft, jedoch einen geringeren Umfang aufweist als die Reling 7. Von der Innenreling 15 erstreckt sich ein U-förmiger Bügel 16 nach unten, dessen mittlerer, liegend verlaufender Abschnitt eine Abstellfläche 6 für den kleineren, in das Reduzierstück 12 einzusetzenden Farbeimer bildet. Dadurch, dass die Haltearme 14 jeweils annähernd L-förmig verlaufen und der Reling 7 außen anliegen, ist das Reduzierstück 12 verschiebesicher innerhalb der Reling 7 gehalten.

In ähnlicher Ausgestaltung, jedoch abweichend von dem in Fig. 5 dargestellten Ausführungsbeispiel, können Reduzierstücke vorgesehen sein, deren Innenreling nicht oval, sondern kreisrund verläuft. Je nach Größe des aufzunehmenden Farbeimers können die Reduzierstücke entweder, wie in Fig. 5 dargestellt, eine eigene Abstellfläche 6 in dem für den jeweiligen Farbeimer geeigneten Abstand von der Innenreling 15 aufweisen, oder sie können ohne eine eigene Abstellfläche ausgestaltet sein und es vielmehr ermöglichen, dass der betreffende Farbeimer auf die Abstellfläche 6 des Utensilienträgers 1, also auf den Mittelsteg 10, aufgestellt wird.

### Bezugszeichen:

- 1: Utensilienträger
- 2: Fahrgestell
- 3: Laufrad
- 4: Strebe
- 5: Platte
- 6: Abstellfläche
- 7: Reling
- 8: Halterung
- 9: Stütze
- 10: Mittelsteg
- 11: Farbeimer
- 12: Reduzierstück
- 14: Haltearm
- 15: Innenreling
- 16: Bügel
- 17: Einstecköffnung
- 18: Hülse
- 19: Distanzstrebe

## Patentansprüche

1. Utensilienträger (1) für Maler-Utensilien,
mit einem wenigstens drei Laufräder (3) aufweisenden Fahrgestell (2),
und mit einer zur Aufnahme eines Farbeimers (11) ausgelegten Halterung (8),
wobei die Halterung (8) eine Reling (7) aufweist, die dazu ausgelegt ist, den Farbeimer (11) seitlich zu führen und einen zur Aufnahme des Farbeimers (11) ausgelegten Freiraum umgibt,
wobei die Halterung (8) relativ zum Fahrgestell (2) höhenverstellbar ist.

2. Utensilienträger nach Anspruch 1,
**dadurch gekennzeichnet,**
**dass** die Reling (7) einen ovalen Freiraum zur Aufnahme eines ovalen Farbeimers (11) umgibt.

3. Utensilienträger nach Anspruch 1 oder 2,
**dadurch gekennzeichnet,**
**dass** die Reling (7) als liegend verlaufender Ring ausgestaltet ist.

4. Utensilienträger nach einem der vorhergehenden Ansprüche,
**dadurch gekennzeichnet,**
**dass** Distanzelemente wahlweise zwischen dem Fahrgestell (2) und der Halterung (8) montierbar sind, derart, dass mittels der Distanzelemente der Höhenabstand zwischen dem Fahrgestell (2) und der Halterung (8) einstellbar ist.

5. Utensilienträger nach Anspruch 4,
**dadurch gekennzeichnet,**
**dass** die Distanzelemente als Distanzstreben (19) ausgestaltet sind.

6. Utensilienträger nach einem der vorhergehenden Ansprüche,
**dadurch gekennzeichnet,**
**dass** die Halterung (8) oder die Reling (7) auswechselbar an dem Utensilienträger (1) montiert ist.

7. Utensilienträger nach einem der vorhergehenden Ansprüche,
**dadurch gekennzeichnet,**
**dass** zur Aufnahme eines kleineren Farbeimers (11) ein Reduzierstück (12) in die Halterung (8) oder in die Reling (7) einsetzbar ist, welches einen dementsprechend kleineren Freiraum umgibt.

8. Utensilienträger nach einem der vorhergehenden Ansprüche,
**dadurch gekennzeichnet,**
**dass** der Utensilienträger (1) zur Ablage von zusätzlich zum Farbeimer (11) mitzuführenden Utensilien eine liegend ausgerichtete Platte (5) aufweist.

9. Utensilienträger nach Anspruch 8,
**dadurch gekennzeichnet,**
**dass** zwei Platten (5) im Abstand übereinander angeordnet sind.

10. Utensilienträger nach Anspruch 9,
**dadurch gekennzeichnet,**
**dass** die höhere Platte (5) in einem Abstand von 60 bis 120 cm über dem Boden angeordnet ist.

11. Utensilienträger nach Anspruch 9 oder 10,
**dadurch gekennzeichnet,**
**dass** die höhere Platte (5) als Bestandteil der Halterung (8) eine das Abstellen eines Farbeimers (11) ermöglichende Abstellfläche (6) bildet, welche tiefer angeordnet ist als die Reling (7).

12. Utensilienträger nach einem der vorhergehenden Ansprüche,
**gekennzeichnet durch**
Halteelemente zur Aufnahme von zusätzlich zum Farbeimer (11) mitzuführenden Utensilien.

13. Utensilienträger nach einem der vorhergehenden Ansprüche,
**dadurch gekennzeichnet,**
**dass** am äußeren Umfang des Utensilienträgers (1) wenigstens ein nach außen ragendes Dämpfungselement angeordnet ist.

14. Utensilienträger nach einem der vorhergehenden Ansprüche,
**gekennzeichnet durch**
ein in die Reling (7) einsetzbares Reduzierstück (12), welches eine Innenreling (15) bildet, derart, dass die Halterung (8) an einen vergleichsweise kleineren Farbeimer (11) angepasst ist.
